# EUROPÄISCHE PATENTSCHRIFT

(11) **EP 0 412 274 B1**
(45) Veröffentlichungstag und Bekanntmachung des Hinweises auf die Patenterteilung: **16.06.1993**
(21) Anmeldenummer: 90112098.0
(22) Anmeldetag: 26.06.1990
(51) Int. Cl.: B60T 13/14, B60T 13/66, B60T 7/08

(54) **Hydraulische Bremseinrichtung für ein Anhängerfahrzeug**
Hydraulic brake installation for a trailer vehicle
Installation de freinage hydraulique pour un véhicule à remorque

(30) Priorität: 20.07.1989 DE 3923964
(43) Veröffentlichungstag der Anmeldung: 13.02.1991
(73) Patentinhaber: ROBERT BOSCH GMBH, 70442 Stuttgart (DE)
(72) Erfinder: Sandau, Hartmut, Dipl.-Ing. (FH), D-7141 Schwieberdingen (DE)

(56) Entgegenhaltungen:
- DE-A- 2 852 616
- DE-A- 3 301 375
- DE-A- 3 712 018
- US-A- 3 819 238

## Beschreibung

### Stand der Technik

Die Erfindung geht aus von einer hydraulischen Bremseinrichtung nach der Gattung des Hauptanspruchs. Eine Solche Bremseinrichtung geht z.B. aus DE-A- 33 01 375 hervor. Nachteilig bei einer derartigen Bremseinrichtung ist, daß die Ansprech- und Lösezeit der Hand- bzw. Notbremse zu lang und der Bremszylinder zu groß und zu kompliziert ist.

### Vorteile der Erfindung

Die erfindungsgemäße hydraulische Bremseinrichtung mit den kennzeichnenden Merkmalen des Hauptanspruchs hat demgegenüber den Vorteil, daß durch höheren Druck die Ansprechzeit für den Bremsvorgang kurz ist und daß der oder die Bremszylinder kleiner bauen. Da für jedes Rad des Anhängers ein Bremszylinder notwendig ist, ergibt sich durch die kleinere Bremszylinder-Ausführung ein beträchtlicher Kostenvorteil. Beim Abreißen der Bremsleitung wird die Anhängerbremse automatisch aktiviert. Dabei tritt kaum Öl nach außen. Die Umrüstung älterer Bremssysteme ist verhältnismäßig einfach.

### Zeichnung

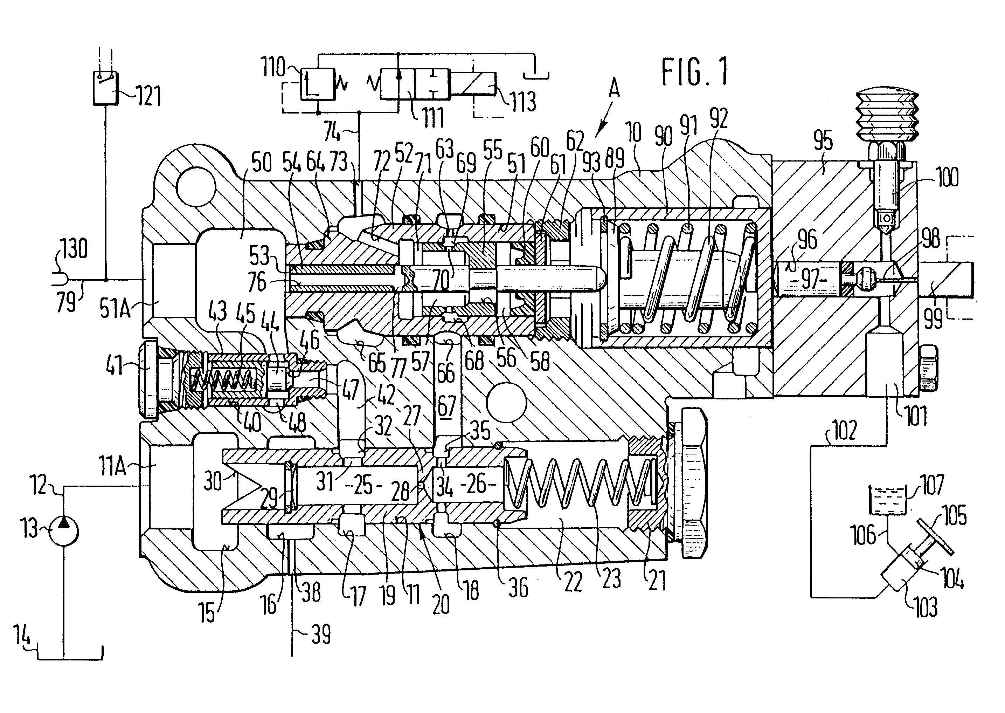

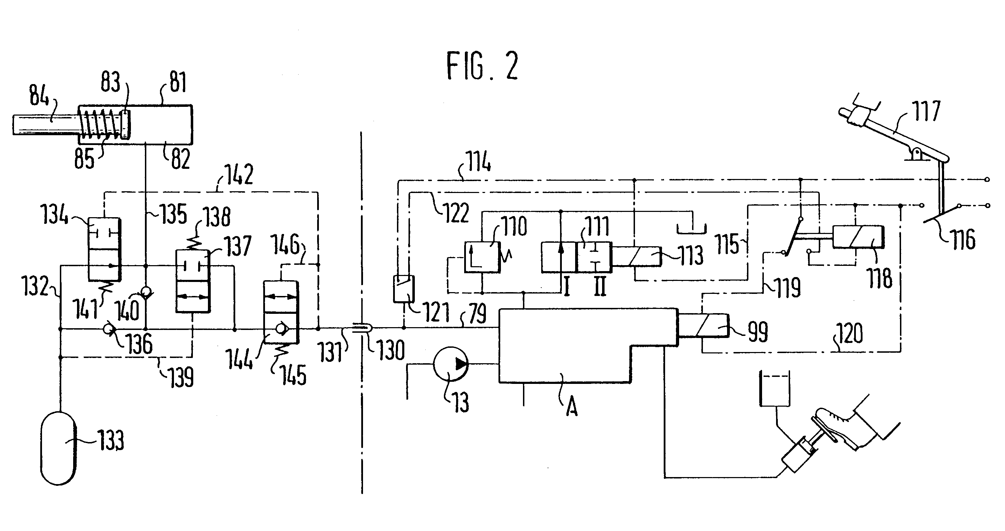

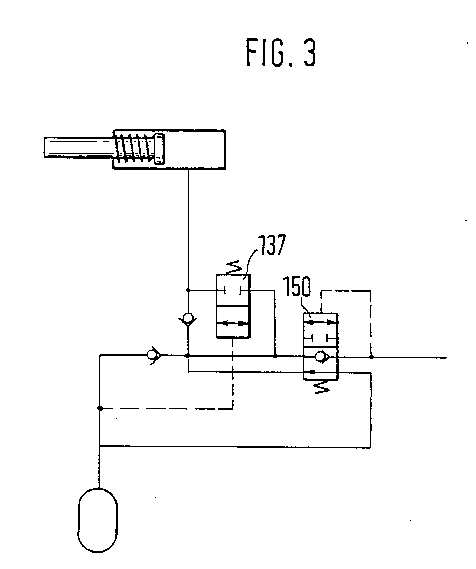

Ein Ausführungsbeispiel der Erfindung ist in der nachfolgenden Beschreibung und Zeichnung wiedergegeben. Letztere zeigt in Figur 1 einen Längsschnitt durch ein Bremsventil, in Figur 2 das Bremsventil mit zugehöriger Hydraulikanlage, in Figur 3 eine Abwandlung eines Einzelteils nach Figur 2.

### Beschreibung des Ausführungsbeispiels

Die hydraulische Bremseinrichtung für ein Anhängerfahrzeug weist ein Bremsventil A auf, mit einem Gehäuse 10, das in seinem unteren Teil eine durchgehende Längsbohrung 11 hat. An deren Einlaß 11A ist die Förderleitung 12 einer Pumpe 13 angeschlossen, die Druckmittel aus einem Behälter 14 ansaugt. An der Längsbohrung sind vier Ringnuten 15 bis 18 ausgebildet; das rechte Ende der Längsbohrung ist durch eine Verschlußschraube 21 verschlossen. In der Längsbohrung 11 ist der Steuerschieber 19 eines Stromregelventils 20 gleitend geführt, auf den eine im hinteren Raum 22 der Längsbohrung 11 angeordnete Reglerfeder 23 einwirkt, die sich an der Verschlußschraube 21 abstützt.

Der Steuerschieber hat zwei längsverlaufende, innere Hohlräume 25, 26, die durch eine Wand 27 getrennt sind, in welcher eine mittige Drossel 28 ausgebildet ist. Im vorderen Teil des Steuerschiebers, d. h. im Raum, 25 ist eine Blende 29 angeordnet. An seiner linken Stirnseite hat der Steuerschieber mindestens eine dreieckförmige Kerbe 30. Der Raum 25 des Steuerschiebers 19 ist von einer Querbohrung 31 durchdrungen, die in eine an der Außenseite des Steuerschiebers ausgebildete Ringnut 32 mündet, welche mit der Ringnut 17 korrespondiert. Der hintere Raum 26 des Steuerschiebers ist von einer Querbohrung 34 durchdrungen, welche ebenfalls in eine an der Außenseite des Steuerschiebers ausgebildete Ringnut 35 mündet; diese korrespondiert mit der Ringnut 18. Die linke Endstellung des Steuerschiebers ist durch einen Sprengring 36 festgelegt. An die Ringnut 16 ist noch eine Bohrung 38 angeschlossen, die zum Äußeren des Gehäuses führt und an die eine Leitung 39 angeschlossen ist, die Verbindung zum Behälter oder zu einem Verbraucher hat.

Parallel zur Längsbohrung 11 verläuft im linken Teil des Gehäuses 10 eine Sackbohrung 40, deren linke Seite durch eine Verschlußschraube 41 verschlossen ist und deren rechtes Ende in einen Kanal 42 mündet, welcher Verbindung zur Ringnut 17 an der Längsbohrung 11 hat. In der Sackbohrung ist ein Ventileinsatz 43 angeordnet, der ein Rückschlagventil 44 aufnimmt, welches durch eine sich an der Verschlußschraube abstützende Feder 45 gegen einen Ventilsitz 46 am Einlaß 47 des Rückschlagventils gedrückt wird. Der Auslaß des Rückschlagventils besteht in einer Querbohrung 48, die in einen Raum 50 mündet, welcher Teil einer durchgehenden Längsbohrung 51 ist, die sich im oberen Teil des Ventilgehäuses 10 befindet und die parallel zur Längsbohrung 11 verläuft. Die Längsbohrung 51 ist als Stufenbohrung ausgebildet und nimmt unter anderem einen becherförmig ausgebildeten Einsatzkörper 52 auf, in dessen vorderem Bohrungsteil 53 ein verhältnismäßig lang ausgebildetes Kölbchen 54 gleitend geführt ist. Mit diesem ist formschlüssig ein Steuerschieber 55 verbunden, welcher einen Durchlaß 56 hat, der zwei Kammern 57, 58 miteinander verbindet. Am rechten Ende des Einsatzkörpers 52 befindet sich eine Dichtung 60, die sich an einer den Einsatzkörper verschließenden Scheibe 61 abstützt. Sie wird durch eine Ringschraube 62 festgehalten, welche auch den Einsatzkörper gegen eine Gehäuseschulter 64 andrückt.

An der Längsbohrung 51 sind zwei Ringnuten 65, 66 ausgebildet, wobei von der Ringnut 66 ein Gehäusekanal 67 zur Ringnut 18 an der Längsbohrung 11 führt. Von der Ringnut 66 geht eine Querbohrung 63 aus, die in eine Ringnut 68 an der Innenseite des Einsatzkörpers 52 mündet, welche mit einer Ringnut 69 am Außenumfang des Steuer schiebers 55 korrespondiert; dort ist die Wand des Steuerschiebers durch eine Querbohrung 70 durchdrungen. Vom linken Raum 71 am Einsatzkörper 52 führt eine Schrägbohrung 72 zur Ringnut 65, von welcher eine Querbohrung 73 zum Äußeren des Gehäuses verläuft; an diese Querbohrung ist eine Leitung 74 angeschlossen.

Im linken Teil des Kölbchens 54 ist eine längsverlaufende Sackbohrung 76 ausgebildet, deren Ende durch eine Querbohrung 77 durchdrungen ist, welche mit dem Raum 71 in Verbindung bringbar ist. An den Einlaß 51A der Längsbohrung 51 ist eine Leitung 79 angeschlossen, die über eine Leitungskupplung 130 mit einer auf dem Anhänger installierten Leitung 131 verbunden ist. Darauf ist weiter unten näher eingegangen.

Das rechte Ende des Kölbchens 54 legt sich gegen ein Federwiderlager 89, das in einem becherförmigen Kolben 90 angeordnet ist, welcher im hinteren Teil der Längsbohrung 51 gleitend geführt ist. Am Boden des Kolbens 90 stützen sich Druckfedern 91, 92 ab, welche das Federwiderlager 89 gegen einen im Kolben 90 angeordneten Sprengring 93 drücken. Das hintere Ende der Längsbohrung 51 ist durch ein Gehäuseteil 95 verschlossen, in dem eine Sackbohrung 96 ausgebildet ist, die ein Kölbchen 97 aufnimmt, auf welches der Stößel 98 eines Elektromagneten 99 einwirkt. Hierzu wird auf die Figur 2 verwiesen. Das Kölbchen 97 liegt am Boden des Kolbens 90 an. An die Sackbohrung 96 ist in bekannter Weise eine Entlüftungseinrichtung 100 angeschlossen. Außerdem mündet in die Sackbohrung 96 eine Querbohrung 101, an welche eine Leitung 102 angeschlossen ist, die zu einem Bremsdruckgeber 103 führt. Dieser weist einen Kolben 104 auf mit einer Bremsplatte 105, die vom Fahrer zu bedienen ist. An den Druckraum des Bremsdruckgebers ist über eine Leitung 106 ein Nachfüllbehälter 107 angeschlossen.

An die Leitung 74 ist über eine Leitung 109 einerseits ein Druckbegrenzungventil 110 angeschlossen, das auf einen niedrigen Druck - z. B. 10 bar eingestellt ist, andererseits ein elektromagnetisch betätigbares 2/2-Wegeventil 111 mit der Durchflußstellung I und der Sperrstellung II. Der Elektromagnet 113 ist einerseits an eine elektrische Leitung 114, andererseits über eine Leitung 115 an einen Schalter 116 angeschlossen, der von der Handbremse 117 des Fahrzeugs betätigbar ist. Weiterhin ist im elektrischen System ein Relais 118 angeordnet. Von diesem führt eine Leitung 119 zum Elektromagneten 99 und von diesem eine Leitung 120 zurück zur Leitung 115. An die Leitung 79 ist ein Druckschalter 121 angeschlossen, von dem die Leitung 114 ausgeht und an den auch noch eine Leitung 122 angeschlossen ist, die zum Relais 118 führt.

Die auf dem Anhänger installierte Leitung 131 mündet in eine Leitung 132, an die einerseits ein Druckspeicher 133 angeschlossen ist und andererseits ein 2/2-Wegeventil 134, die zu einer Leitung 135 führt, welche ebenfalls von der Leitung 131 ausgeht und an einem Bremszylinder 81 mündet, und zwar in einen Druckraum 82. Dort ist ein Kolben 83 mit Kolbenstange 84 entgegen der Kraft einer Feder 85 geführt.

In der Leitung 131, und zwar zwischen dem Abschnitt der Mündung der Leitung 135 in jene und der Leitung 132 ist ein Rückschlagventil 136 angeordnet, das sich in Richtung zur Leitung 132 hin zu öffnen vermag. In der Leitung 132 ist vor ihrer Mündungsstelle in die Leitung 135 ein 2/2-Wegeventil 137 angeordnet, auf das eine Feder 138 entgegen dem Druck in einer Steuerleitung 139 einwirkt, welche von der Leitung 132 unmittelbar hinter dem Druckspeicher 133 ausgeht. In der Leitung 135 ist zwischen ihrer Mündungsstelle an der Leitung 131 und der Einmündung der Leitung 132 in die Leitung 135 ebenfalls ein Rückschlagventil 140 angeordnet, welches sich in Richtung zum Bremszylinder 81 hin zu öffnen vermag. Auf das Wegeventil 134 wirkt ebenfalls eine Druckfeder 141 ein, und zwar entgegen dem Druck in einer Steuerleitung 142, die von der Leitung 131 ausgeht. In der Leitung 131 ist ein Steuerventil 144 angeordnet, auf welches eine Feder 145 einwirkt entgegen dem Druck in einer Steuerleitung 146, welche an die Leitung 142 angeschlossen ist.

Die hydraulische Bremseinrichtung arbeitet wie folgt:

Wenn das Fahrzeug abgestellt ist und damit die Leitungen 79 und 131 drucklos sind, so befindet sich das Steuerventil 144 in der in Figur 2 gezeichneten Sperrstellung und das Wegeventil 134 in Durchgangsstellung. Der Druck des bereits früher gefüllten Druckspeichers 133 wirkt über die Leitungen 132 und 135 im Druckraum 82 des Bremszylinders 81 und fährt dessen Kolben aus. Die Hand- bzw. Notbremse ist angezogen.

Bei Inbetriebnahme des Fahrzeugs und jetzt eingeschalteter Pumpe 13 gelangt Druckmittel über den Einlaß 11A und die Ringnut 15 in das Innere des Steuerschiebers 19 des Stromregelventils 20. An der Blende 29 ergibt sich ein Flüssigkeitsstau wodurch der Steuerschieber 19 nach rechts entgegen der Kraft der Reglerfeder 23 verschoben wird. Über die Drosselbohrung 28 wird auch der Raum 22 mit Druckmittel gefüllt. Ein Teil des geförderten Druckmittels gelangt über die Ringnut 16 und die Bohrung 38 in die Leitung 39, ein anderer, geringer sogenannter Steuerölstrom fließt über die Drossel 28 in den Raum 26, von hier über die Querbohrung 34 in die Ringnut 35 und dann in den Kanal 67. Von hier gelangt das Druckmittel in die Ringnut 66, dann über die Querbohrung 63 in die Ringnut 68, von dieser in die Ringnut 69 und über die Querbohrung 70 in den Raum 57 innerhalb des Steuerschiebers 55. Von diesem Raum fließt das Druckmittel über die Schrägbohrung 27 in die Ringnut 65 und dann über die Querbohrung 73 in die Leitung 74 und von dieser zum Behälter.

Wird die Handbremse 117 gelöst, so wird der Schalter 116 geschlossen, wodurch der Elektromagnet 113 und der Elektromagnet 99 eingeschaltet werden. Dadurch gelangt das Steuerventil 111 in seine Sperrstellung II, und das Kölbchen 97 wird gegen den Hohlkolben 90 samt Kölbchen 54 und Steuerschieber 55 nach links gedrückt. Der zuvor geschilderte Steuerölstrom wird nun unterbrochen, da die Ringnuten 68 und 69 durch die Verschiebung des Steuerschiebers 55 nicht mehr miteinander verbunden sind. Nun erfolgt im Raum 22 ein Druckaufbau, welcher den Steuerschieber 19 nach links verschiebt. Jetzt entsteht Verbindung vom Raum 25 im Steuerschieber und über die Querbohrung 31 zum Kanal 42. Durch den dort herrschenden Druck wird das Rückschlagventil 54 vom Ventilsitz 46 abgehoben, so daß nun Druckmittel in den Raum 50 und die Bremsleitung 79 eindringen kann. Der Druck in der Leitung 68 steigt jetzt so lange, bis der Magnet 99 abgeschaltet wird. Dies geschieht durch den Druckschalter 121 und das Relais 118. Mit dem Druckschalter 121 wird die Druckhöhe bestimmt, bei der der Magnet 99 abschaltet. Danach steht - bei gelöster Handbremse - in der Leitung 79 der Druck an, der durch das Druckbegrenzungsventil 110 gewählt wurde (hier 10 bar).

Bei der nun folgenden Drucksteigerung auf ca. 100 bar - der Druckschalter 121 sei so eingestellt - wird zuerst bei etwa 5 bar das Ventil 134 in Sperrstellung und bei ca. 8 bar das Ventil 144 in Durchgangsstellung geschaltet. Danach wird der Druckspeicher 133 über das Bremsventil auf einen Druck von 100 bar aufgeladen. Bei einem Speicherdruck von etwa 60 bar schaltet das Wegeventil 137 in Durchgangsstellung. Die Feder 85 des Bremszylinders 81 ist so ausgelegt, daß dieser bei den nun anstehenden 10 bar Restdruck einfährt. Das Drucköl aus dem Raum 82 des Bremszylinders 81 fließt dabei über die Wegeventile 137 und 144, die Bremsleitung 131 und die Leitung 79 sowie über das Bremsventil A und das Druckbegrenzungsventil 110 zum Rücklauf.

Das Relais 118 sorgt dafür, daß der Elektromagnet 99 erst wieder eingeschaltet werden kann, nachdem die Handbremse 117 angezogen wurde.

Ist das Fahrzeug in Betrieb und soll gebremst werden, so betätigt der Fahrer über die Fußbremse 105 den Bremsdruckgeber 103, wodurch in der Leitung 102 Druck aufgebaut wird und das Kölbchen 97 - wie zuvor durch den Elektromagneten 99 - nach links verschoben wird. Dadurch wird wiederum über den Hohlkolben 90 und das Federwiderlager 89 das Kölbchen 54 nach links gedrückt, wodurch der zuvor geschilderte Steuerölstrom unterbrochen wird, da die Ringnuten 68 und 69 durch die Verschiebung des Steuerschiebers 55 nicht mehr miteinander verbunden sind. Nun erfolgt im Raum 22 ein Druckaufbau, welcher den Steuerschieber 19 nach links verschiebt. Jetzt entsteht Verbindung vom Raum 25 im Steuerschieber und über die Querbohrung 31 zum Kanal 42. Durch den dort herrschenden Druck wird das Rückschlagventil 54 vom Ventilsitz 46 abgehoben, so daß nun Druckmittel unter mehr oder weniger hohem Druck in den Raum 50 und die Bremsleitungen 79 und 131 eindringen kann. Das Ventil 144 befindet sich nun in Durchgangsstellung, so daß Druckmittel einerseits über das Rückschlagventil 136 und die Leitung 132 den Druckspeicher 133 aufladen kann, andererseits über die Leitung 135 und das Rückschlagventil 140 in den Druckraum 82 des Bremszylinders 81 eindringt. Dessen Kolben 83 wird nun entgegen der Kraft der Feder 85 verschoben, und die Kolbenstange 84 betätigt die Bremseinrichtung.

Wenn die Fußbremse gelöst wird, schiebt der in der Bremsleitung 79 herrschende Druck das Steuerkölbchen 54 wieder nach rechts samt Hohlkolben 90 und Kölbchen 97. Dadurch wird die Verbindung vom Inneren des Steuerschiebers 19 über die Drossel 28, den Kanal 67 sowie das Kölbchen 54 und den Steuerschieber 55 zur Leitung 74 wieder hergestellt. Das Steuerventil 111 befindet sich in Sperrstellung II, so daß der Steuerölstrom gedrosselt (10 bar) zum Behälter 14 fließt. Die Bremsleitung 79 wird über die Bohrungen 76, 77 und 72 auf 10 bar entlastet. Nun fährt die Kolbenstange des Bremszylinders aufgrund der Kraft der Feder 85 wieder ein.

Wird die Handbremse 117 angezogen, so öffnet der Schalter 116. Dadurch geht das Steuerventil 111 in Durchflußstellung I, so daß der Bremsdruck auf 10 bar absinkt.

Sinkt der Bremsdruck auf 8 bar, so geht das Wegeventil 144 in Sperrstellung. Fällt der Druck weiter auf 5 bar ab, so schaltet das Wegeventil 134 in Durchgangsstellung. Der Speicher 133 füllt jetzt den Bremszylinder 81.

Beim Ausführungsbeispiel nach Figur 3 sind die 2/2-Ventile 134 und 146 von Figur 2 durch das 4/2-Wegeventil 150 ersetzt.

## Patentansprüche

1. Hydraulische Bremseinrichtung für ein Anhängerfahrzeug mit einem Bremsventil (A), das den von einer Druckmittelquelle (13) geförderten Druckmittelstrom über ein Stromregelventil (20) einer Bremseinrichtung (81) und/oder einem Behälter (14) bzw. einem zweiten Verbraucher zuführt, und mit einem Vorsteuerventil (54, 55), das durch einen Bremsdruckgeber (103) in eine Position gebracht werden kann, in welcher ein über das Stromregelventil und das Steuerventil zum Behälter fließender Steuerölstrom unterbrochen wird, worauf ein Bremsvorgang einsetzt, und wobei der Bremsdruckgeber (103) einen druckmittelbeaufschlagten Kolben (96) aufweist, der auf das Vorsteuerventil (54, 55) einwirkt, wobei an die Bremsleitung ein Bremszylinder (81) angeschlossen und so ausgebildet ist, daß bei angezogener Handbremse (117) die Fahrzeugbremse durch einen von einem Druckspeicher (133) herrührenden Druck belasteten Kolben (82) betätigt ist, bei gelöster Handbremse und im Betriebszustand und nicht betätigter Fußbremse (105) durch einen geringen Flüssigkeitsdruck gelöst ist, der durch ein an das Bremsventil (A) angeschlossenes Druckbegrenzungsventil (110) vorgegeben ist, dadurch gekennzeichnet, daß zur Steuerung des Bremszylinders (81) und Aufladung des Druckspeichers (133) mindestens zwei druckgesteuerte Ventile (134, 137, 144, 150) vorgesehen sind und unterschiedliche Schaltdrücke aufweisen und daß sich diese Geräte auf dem Anhänger befinden und die Druckmittelversorgungsleitung derselben über eine Hydraulikkupplung (130) mit der Hydraulikleitung (79) auf dem Zugfahrzeug verbunden ist.

2. Einrichtung nach Anspruch 1, dadurch gekennzeichnet, daß für die Steuerung des Druckspeichers (133) und des Bremszylinders (81) drei Steuerventile vorgesehen sind.

3. Einrichtung nach Anspruch 1, dadurch gekennzeichnet, daß für die Steuerung des Druckspeichers (133) und des Bremszylinders (81) nur zwei Ventile vorgesehen sind.

4. Einrichtung nach einem der Ansprüche 1 bis 3, dadurch gekennzeichnet, daß zum Absichern des Druckspeichers gegenüber der Bremsleitung ein Rückschlagventil (136) vorgesehen ist.

5. Einrichtung nach einem der Ansprüche 1 bis 4, dadurch gekennzeichnet, daß sich zwischen dem Bremszylinder (81) und der Hydraulikleitung (131) ebenfalls ein Rückschlagventil (140) befindet.

6. Einrichtung nach Anspruch 1, dadurch gekennzeichnet, daß der Druckschalter (121) die Höhe des Speicherladedrucks bestimmt.

## Claims

1. Hydraulic brake device for a trailer vehicle, having a brake valve (A) which supplies the pressure medium flow delivered from a pressure medium source (13) via a flow control valve (20) to a brake device (81) and/or a container (14) or a second consumer unit, and having a pilot valve (54, 55), which can be brought by a brake pressure pick-up (103) into a position in which a control oil flow flowing via the flow control valve and the control valve to the container is interrupted, whereupon a braking procedure is initiated, and in which the brake pressure pick-up (103) has a piston (96) subjected to pressure medium, which piston (96) acts on the pilot valve (54, 55), a brake cylinder (81) being connected to the brake conduit and being configured in such a way that when the hand brake (117) is pulled on, the vehicle brake is actuated by a piston (82) loaded by a pressure derived from a pressure reservoir (133) and, when the hand brake is released and in the operating condition and, when the foot brake (105) is not actuated, the vehicle brake is released by a low fluid pressure which is specified by a pressure limiting valve (110) connected to the brake valve (A), characterised in that at least two pressure-controlled valves (134, 137, 144, 150) are provided to control the brake cylinder (81) and to charge the pressure reservoir (133) and exhibit different switching pressures and that these units are located on the trailer and the pressure medium supply conduit of the same is connected to the hydraulic conduit (79) on the traction vehicle by means of a hydraulic coupling (130).

2. Device according to Claim 1, characterised in that three control valves are provided for the control of the pressure reservoir (133) and the brake cylinder (81).

3. Device according to Claim 1, characterised in that only two valves are provided for the control of the pressure reservoir (133) and the brake cylinder (81).

4. Device according to one of Claims 1 to 3, characterised in that a non-return valve (136) is provided to secure the pressure reservoir relative to the brake conduit.

5. Device according to one of Claims 1 to 4, characterised in that a non-return valve (140) is similarly located between the brake cylinder (81) and the hydraulic conduit (131).

6. Device according to Claim 1, characterised in that the pressure switch (121) determines the level of the reservoir charging pressure.

## Revendications

1. Installation hydraulique de freinage pour un véhicule à remorque avec une vanne de freinage (A), qui amène le début d'agent sous pression refoulé par une source d'agent sous pression (13) via une vanne de régulation de débit (20) à une installation de freinage (81) et/ou à un réservoir (14) ou à un deuxième appareil utilisateur, et avec une vanne de précommande (54, 55), qui peut être mise par un détecteur de pression de freinage (103) dans une position, dans laquelle est interrompu via la vanne de régulation de débit et la soupape de commande un débit d'huile de commande allant au réservoir, un processus de freinage s'enclenchant et le détecteur de pression de freinage (103) présentant un piston (96) soumis à l'action de l'agent sous pression, piston qui agit sur la vanne de précommande (54, 55), un cylindre de frein (81) étant raccordé à la conduite de frein et constitué de telle façon que, quand le frein à main (117) est tiré, le frein du véhicule est actionné par un piston (82) soumis à une pression provenant d'un accumulateur de pression (133), quand le frein à main est desserré et en marche et la pédale de frein (105) n'étant pas actionnée, il est libéré par une faible pression du liquide, qui est prédéfinie par une soupape de limitation de pression (110) raccordée à la vanne de freinage (A), installation hydraulique de freinage, caractérisée en ce que pour commander le cylindre de frein (81) et pour charger l'accumulateur de pression (133) il est prévu au moins deux soupapes commandées par l'agent sous pression (134, 137, 144, 150) et qui présentent des pressions de commutation différentes, et en ce que des appareils se trouvent sur la remorque et la conduite d'alimentation en agent sous pression de ces appareils est reliée par un accouplement hydraulique (130) à la conduite hydraulique (79) sur le véhicule tracteur.

2. Dispositif selon la revendication 1, caractérisé en ce que pour la commande de l'accumulateur de pression (133) et du cylindre de frein (81) il est prévu trois soupapes de commande.

3. Dispositif selon la revendication 1, caractérisé en ce que pour la commande de l'accumulateur de pression (133) et du cylindre de frein (81), n'est prévu que deux soupapes.

4. Dispositif selon l'une des revendications 1 à 3, caractérisé en ce que pour protéger l'accumulateur de pression vis-à-vis de la conduite de frein, il est prévu un clapet de non retour (136).

5. Dispositif selon l'une des revendications 1 à 4, caractérisé en ce qu'un clapet de non retour (140) se trouve également entre le cylindre de frein (81) et la conduite hydraulique (131).

6. Dispositif selon la revendication 1, caractérisé en ce que l'interrupteur à pression (121) détermine la hauteur de la pression de charge de l'accumulateur.
